# EUROPÄISCHE PATENTANMELDUNG

(11) **EP 4 557 588 A1**
(43) Veröffentlichungstag der Anmeldung: **21.05.2025**
(21) Anmeldenummer: 23210599.9
(22) Anmeldetag: 17.11.2023
(51) Int. Cl.: H02K 7/18, F03D 9/25, H01R 39/08, H02K 13/00

(54) **SCHLEIFRING MIT ISOLIERTER LÜFTERNABE**

(71) Anmelder: Flender GmbH, 46395 Bocholt (DE)
(72) Erfinder: MEMMINGER, Oliver, 46395 Bocholt (DE); SCHIFFERER, Klaus, 46395 Bocholt (DE); BINDER, Herbert, 46395 Bocholt (DE); KRONPAß, Nicole, 46395 Bocholt (DE); RASKOPF, Andrej, 46395 Bocholt (DE); SENTEF, Markus, 46395 Bocholt (DE)
(74) Vertreter: Michalski Hüttermann & Partner Patentanwälte mbB

(57) **Zusammenfassung**

Die Erfindung betrifft einen Schleifring für eine Schleifringeinheit einer elektrischen Maschine mit einer Maschinendrehachse A_{D}, umfassend zumindest einen Einzelschleifring 12, zumindest zwei Isolierbereiche 14 und einen stirnseitig angeordneten, elektrisch isolierenden Außenflanschring 16, wobei die zumindest zwei Isolierbereiche 14 und der zumindest eine Einzelschleifring 12 konzentrisch zu der Maschinendrehachse A_{D} und abwechselnd axial benachbart zueinander angeordnet sind. Der Außenflanschring 16 fungiert als Lüfternabe und bildet eine außenumfänglich verlaufende Aufnahmestruktur 18 zur Befestigung von Axiallüfterflügeln 20 aus. Der Außenflanschring 16 erfüllt die drei Funktionen Lüfterflansch, elektrische Isolation und Fliehkraftstütze für die Schleifringanschlüsse.

## Beschreibung

Die Erfindung betrifft einen Schleifring für eine Schleifringeinheit einer elektrischen Maschine mit einer Maschinendrehachse A_{D}, mit zumindest einem Einzelschleifring, zumindest zwei Isolierbereichen und einem stirnseitig angeordneten, elektrisch isolierenden Außenflanschring. Die zumindest zwei Isolierbereiche und der zumindest eine Einzelschleifring sind konzentrisch zu der Maschinendrehachse A_{D} und abwechselnd axial benachbart zueinander angeordnet.

Die Erfindung betrifft eine Schleifringeinheit für eine doppelt gespeiste Asynchronmaschine, die beispielsweise in Generatoren von Windkraftanlagen zum Einsatz kommen können. Innerhalb des Generators kommt eine Scheifringeinheit zum Einsatz, die zusammen mit stationären Kohlebürsten die Leistungsübertragung gewährleistet. Die Schleifringeinheit ist bei einer Leitungsübertragung im Megawatt-Bereich hohen thermischen Belastungen ausgesetzt. Die Schleifringeinheit benötigt eine Fremdbelüftung oder einen Lüfter zur Erzeugung eines Luftstroms zur Kühlung der kompletten Schleifringeinheit, bestehend aus Schleifringen und Kohlebürsten. Bei Verwendung eines Lüfters benötigt man eine Anschlussflanschstelle bzw. eine Nabe zur Aufnahme des Lüfters. Lüfter und Flanschstelle müssen mechanisch gesehen robust und axial kurz bauen aber auch günstig im Preis sein. Des Weiteren werden hohe Anforderungen an den Rundlauf und an die Festigkeit gestellt. Aus elektrischer Sicht muss sichergestellt sein, dass alle geforderten Luft- und Kriechstrecken zu den naheliegenden elektrischen Bauteilen eingehalten werden.

Bisher wurde dieser Generator entweder mit einem Radiallüfter, der an einer robusten, teuren Flanschscheibe aus Stahl am Schleifring positioniert ist, oder einem Axiallüfter mit einer eigenen Lüfternabe, die entsprechend angeflanscht werden muss, betrieben. Das Einhalten der Luft- und Kriechstrecken gestaltet sich in dem sehr begrenzten Bauraum in beiden Fällen schwierig und macht die jeweiligen Konzepte teuer. Eine elektrische Maschine mit einer Schleifringeinheit, Kohlebürsten und einem Radiallüfter zeigt beispielsweise die DE 10 2013 217 306 A1. Es besteht folglich ein Bedürfnis neue Möglichkeiten zum Anbau eines solchen Lüfters zu finden, um den immer höheren Leistungen und den größer werdenden Maschinen mit ihren weiter beschränkten Einbausituationen Rechnung zu tragen.

Es ist die Aufgabe der Erfindung Maßnahmen aufzuzeigen, die ein verbessertes Lüfterkonzept bei beschränkten Bauraumsituationen ermöglichen.

Die Lösung der Aufgabe erfolgt durch eine Schleifringeinheit mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Schleifringeinheit für eine elektrische Maschine mit einer Maschinendrehachse A_{D}, umfassend zumindest einen Einzelschleifring, zumindest zwei Isolierbereiche und einen stirnseitig angeordneten, elektrisch isolierenden Außenflanschring, wobei die zumindest zwei Isolierbereiche und der zumindest eine Einzelschleifring konzentrisch zu der Maschinendrehachse A_{D} und abwechselnd axial benachbart zueinander angeordnet sind und der Außenflanschring als Lüfternabe fungierend eine außenumfänglich verlaufende Aufnahmestruktur zur Befestigung von Axiallüfterflügeln ausbildet.

Der nunmehr vorgesehene Außenflanschring ist gegenüber der herkömmlichen Ausgestaltung derart modifiziert, dass er unmittelbar zur Aufnahme und Befestigung von Axiallüfterflügeln dienen kann. Der Außenflanschring fungiert somit als Lüfternabe. Der Außenflanschring kann auch weiterhin als sogenannter Fliehkraftring benutzt werden. Es kann somit auf den herkömmlichen, aus Stahl gefertigten Lüfterflansch verzichtet werden, an den der Lüfter bzw. die Lüfterflügel angebunden wurden.

Der erfindungsgemäße Außenflanschring ist so geformt, dass die Lüfterflügel optimal aufgenommen bzw. angebunden werden können. Gleichzeitig erfüllt der Außenflanschring die Anforderungen an die Isolation des Systems, die Einhaltung der Luft- und Kriechstrecken und Schutz der Anschlussbolzen gegen die Fliehkraft. Der wesentliche Unterschied zu herkömmlichen Ausgestaltungen ist, dass die Form der Lüfterfüße der Lüfterflügel komplett in dem als Isolationsformteil aus Kunststoff hergestellten Außenflanschring integriert ist. Durch dieses Bauteil werden die hohen Kosten der bisherigen Lösung vermieden, die aus Edelstahl mit viel Verschnitt bei der Fertigung bestand. Bei der erfinderischen Lösung wird keine eigene, separate Lüfternabe, wie es bei Axiallüftern üblich ist, benötigt. Des Weiteren wird vermieden eine Druckguss-Lüfternabe fertigen zu müssen, da hier die Formkosten hoch sind und das Problem mit den einzuhaltenden Luft- und Kriechstrecken noch immer nicht gelöst ist und weitere Bauteile zur Isolation benötigt werden. Durch dieses integrierte, isolierende Bauteil in Gestalt des Außenflanschrings wird die Länge des benötigten Bauraums reduziert bzw. es werden keine weiteren Bauteile zur Isolierung benötigt. In der Summe ist diese Bauweise deutlich günstiger. Der Außenflanschring erfüllt drei Funktionen in einem, nämlich: Lüfteraufnahme bzw. Nabe, elektrische Isolation und Fliehkraftstütze für die Schleifringanschlüsse.

In einer bevorzugten Ausgestaltung ist eine elektrisch und mechanisch mit dem zumindest einen Einzelschleifring verbundene Anschlusseinrichtung vorgesehen, die zumindest einen axial durch den Außenflanschring herausragenden Anschlussbolzen aufweist. Jeder der Einzelschleifringe ist mit einem oder mehreren Anschlussbolzen elektrisch kontaktiert, sodass die auf einer Lauffläche des jeweiligen Einzelschleifringes bereitgestellte elektrische Energie dem Anschlussbolzen zugeführt werden kann.

In einer zudem bevorzugten Ausgestaltung besteht die Aufnahmestruktur aus einer umfänglichen Abfolge von Aufnahmetaschen und seitlichen Begrenzungsnocken. Die Aufnahmetaschen werden zu jeder Umfangsseite von einem Begrenzungsnocken eingefasst. Die einander gegenüberliegenden Seitenwandungen der Begrenzungsnocken sind zweckmäßigerweise, in einer Axialsicht betrachtet, konisch zueinander angestellt, so dass ein von radial außen eingesetzter Lüfterflügel in einem Aufnahmetrichter einsitzt und einen festen Halt hat. Es können auch andersartig geformte Aufnahmetaschen vorgesehen sein. Der Halt der Lüfterflügel wird über die Begrenzungsnocken an dem Flügelfuß und über Bohrungen an dem Aufnahmeflansch und einem gegenüberliegenden Druckring, der korrespondierende Bohrungen aufweist, erreicht.

In einer weiterhin bevorzugten Ausgestaltung werden die Aufnahmetaschen in axialer Richtung jeweils von einem radialen Anlagebund begrenzt. Die radiale Anlagebund dient insbesondere als definierter Axialanschlag, gegen den die Lüfterflügel angesetzt werden und bevorzugt auch befestigt, beispielsweise verschraubt, werden.

Im Hinblick auf die Materialbeschaffenheit des Außenflanschringes ist besonders bevorzugt, wenn dieser als ein Kunststoffpressteil oder als ein Kunststofffrästeil ausgeführt ist. Hierbei kann der Außenflanschring als ein zusammengesetzten Metall-Kunststoff-Bauteil mit einem Metallkern und einem Kunststoffüberzug ausgeführt werden.

In einer besonders bevorzugten und alternativen Ausführung ist vorgesehen, dass der zu dem Außenflanschring benachbarte Isolierbereich einstückig mit dem Außenflanschring ausgebildet ist.

Eine Ausgestaltung ist bevorzugt, bei der eine konzentrisch innerhalb des zumindest einen Einzelschleifrings und innerhalb der zumindest zwei Isolierbereiche angeordnete Hohlwelle vorgesehen ist und der Außenflanschring endseitig an die Hohlwelle angesetzt ist. Hierbei kann in einer konkreten Ausführung vorgesehen sein, dass die Hohlwelle in eine zentrische Bohrung des Außenflanschrings hereinragt und die Hohlwelle und der Außenflanschring in dem sich in axialer Richtung überlappenden Bereich miteinander verbunden sind.

Die Aufgabe wird zudem gelöst durch eine elektrische Maschine, insbesondere für eine Windkraftanlage, umfassend eine Schleifringeinheit wie zuvor beschrieben.

Schließlich wird die Aufgabe auch gelöst durch eine Windkraftanlage mit ebensolcher elektrischer Maschine.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine Ansicht einer Schleifringeinheit;
Fig. 2: eine Detailansicht des Schleifrings nach Figur 1;
Fig. 3: ein Axialschnitt eines Schleifrings mit einem Außenflanschring zur Aufnahme von Lüfterflügeln;
Fig.4: eine perspektivische Ansicht eines Schleifrings mit einem Außenflanschring zur Aufnahme von Lüfterflügeln;
Fig. 5a), 5b): weitere Detaillierungen eines Schleifrings und
Fig. 6: eine weitere perspektivische Ansicht eines Schleifrings.

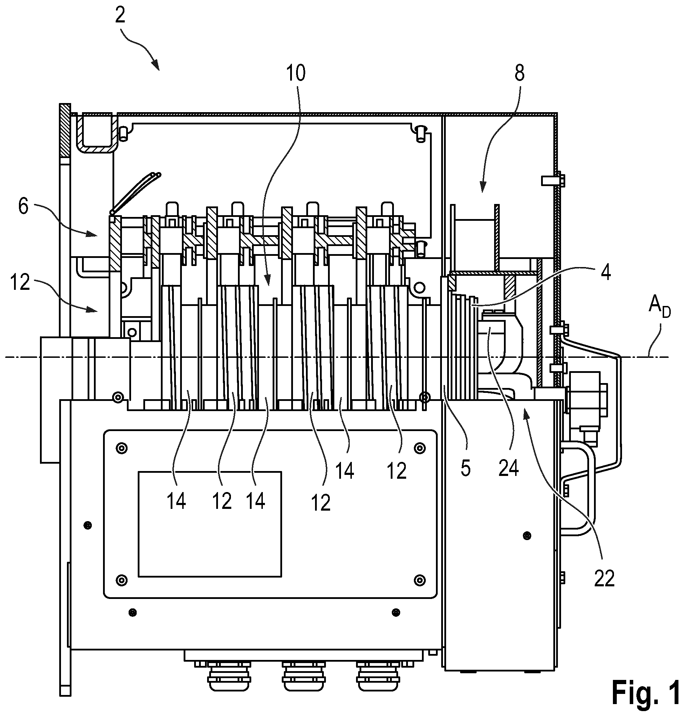

Die Figur 1 zeigt ein axiales Ende einer beispielhaften Schleifringeinheit 2, bei der es sich beispielsweise um eine Schleifringeinheit eines Generators einer Windkraftanlage handelt. Die Schleifringeinheit 2 beinhaltet einen Schleifring 10, die mehrere Einzelschleifringe 12 umfasst, nämlich jeweils einen für die drei elektrischen Phasen und einen für den Potentialausgleich. Der Schleifring 10 wird von einer Bürstenanordnung 6 üblicher Bauart abgegriffen. Der Schleifring 10 ist innerhalb der Schleifringeinheit 2 einer elektrischen Maschine um eine Maschinendrehachse A_{D} drehbar gelagert.

An der Stirnseite des Schleifringes 10 befindet sich ein Fliehkraftring 4 und ein Lüfterflansch 5 aus Stahl. Der Fliehkraftring 4 ist elektrisch isolierend hergestellt. Aus dem Fliehkraftring 4 ragen in axialer Richtung umfänglich verteilt Anschlussbolzen 24 heraus. Die Anschlussbolzen 24 sind Teil einer Anschlusseinrichtung 22, die die Einzelschleifringe 12 elektrisch mit dem jeweiligen Anschlussbolzen 24 verbindet.

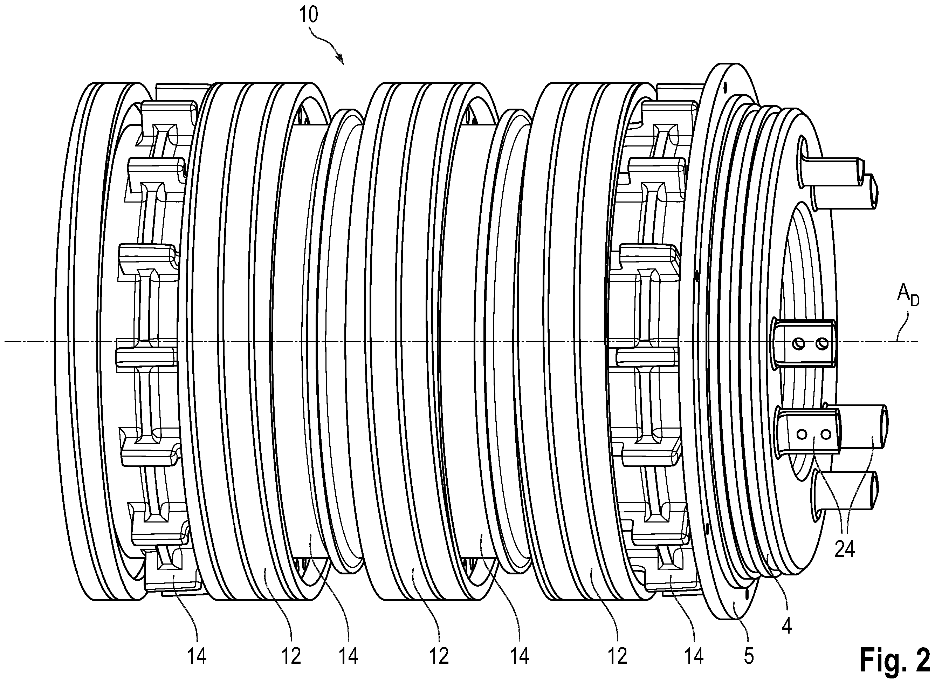

Die Figur 2 zeigt in einer Einzelheit den bereits zu der Figur 1 beschriebenen gesamten Schleifring 10. Zwischen den Einzelschleifringen 12 sind Isolierbereiche 14 angeordnet, um die Einzelschleifringe 12 elektrisch voneinander zu isolieren. Zwischen dem Fliehkraftring 4 und dem benachbarten Isolierbereich 14 der Lüfterflansch 5 aus Stahl vorgesehen, an dem ein Radiallüfterkranz 8 befestigt werden kann, vergleiche hierzu Figur 1.

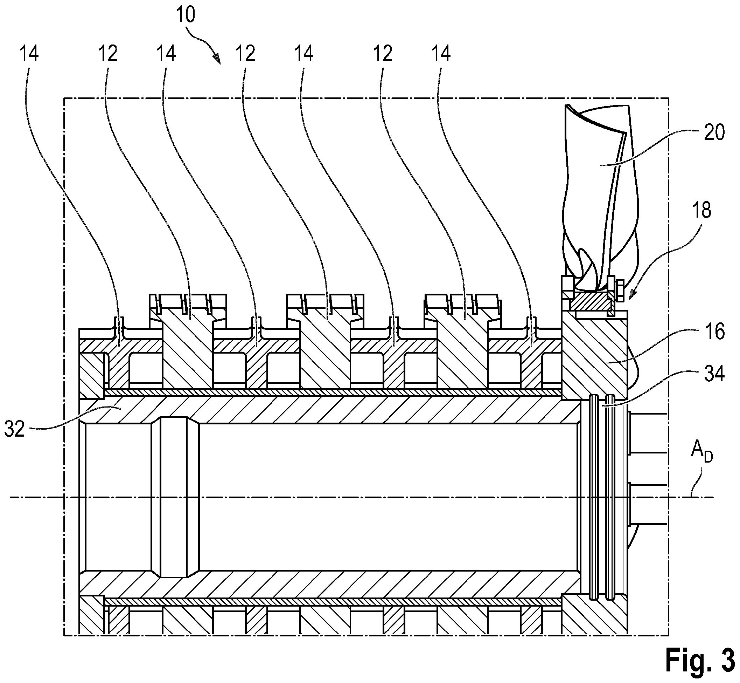

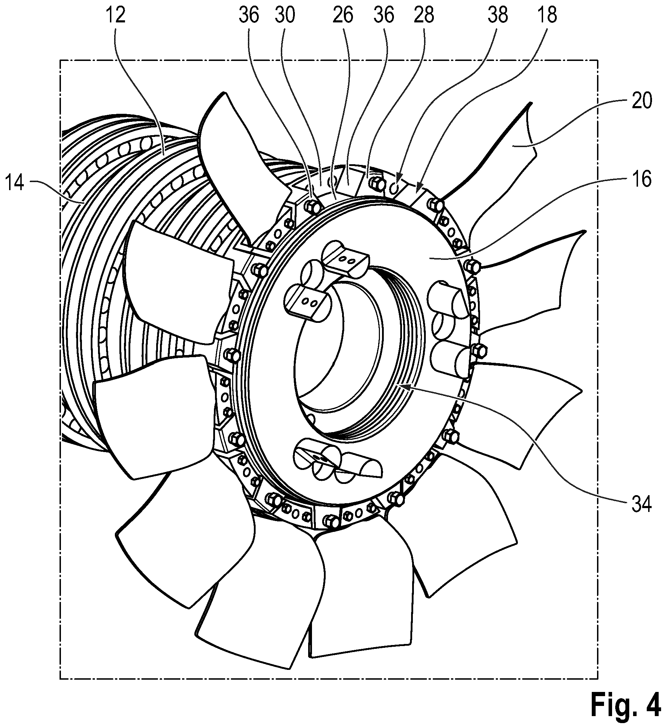

Die Figuren 3 und 4 zeigen den Schleifring 10 in einer möglichen erfindungsgemäßen Ausgestaltung. Es ist ein Außenflanschring 16 vorgesehen, der elektrisch isolierenden ausgeführt ist und der stirnseitig angeordnet ist. Der Außenflanschring 16 ist ein integriertes Bauteil und fungiert als Lüfternabe einerseits und als Fliehkraftring andererseits. Der Außenflanschring 16 ist dazu ausgebildet, den herkömmlichen Fliehkraftring und den stählernen Lüfterflansch zu ersetzen und deren Funktionen zu integrieren. Der Außenflanschring 16 bildet eine außenumfänglich verlaufende Aufnahmestruktur 18 zur Befestigung von Axiallüfterflügeln 20 aus, wie insbesondere in der perspektivischen Ansicht der Figur 4 zu erkennen ist.

Der Schleifring 10 weist eine konzentrisch innerhalb der Einzelschleifringe 12 und innerhalb der Isolierbereiche 14 angeordnete Hohlwelle 32 auf. Die Einzelschleifringe 12 sind drehfest gegenüber der Hohlwelle 32 gehalten. Die Verbindung zwischen Hohlwelle 32 und Außenflanschring 16 ist derart ausgeführt, dass der Außenflanschring 16 endseitig an die Hohlwelle 32 angesetzt ist. Vorliegend ragt die Hohlwelle 32 in eine zentrische Bohrung 34 des Außenflanschrings 16 herein und die Hohlwelle 32 und der Außenflanschring 16 sind in dem sich in axialer Richtung überlappenden Bereich miteinander verbunden.

Die Aufnahmestruktur 18 besteht aus einer umfänglichen Abfolge von Aufnahmetaschen 26 und seitlichen Begrenzungsnocken 28. Die Aufnahmetaschen 26 werden in axialer Richtung jeweils von einem radialen Anlagebund 30 begrenzt. Der Anlagebund 30 ist als Teil des Au-ßenflanschrings ausgeführt. Die Aufnahmetaschen 26 werden zu jeder Umfangsseite von einem Begrenzungsnocken 28 eingefasst. Die einander gegenüberliegenden Seitenwandungen 36 benachbarter Begrenzungsnocken 28 sind, in einer Axialsicht betrachtet, konisch zueinander angestellt, so dass ein von radial außen eingesetzter Axiallüfterflügel 20 in einem Aufnahmetrichter 38 einsitzt und einen festen Halt hat.

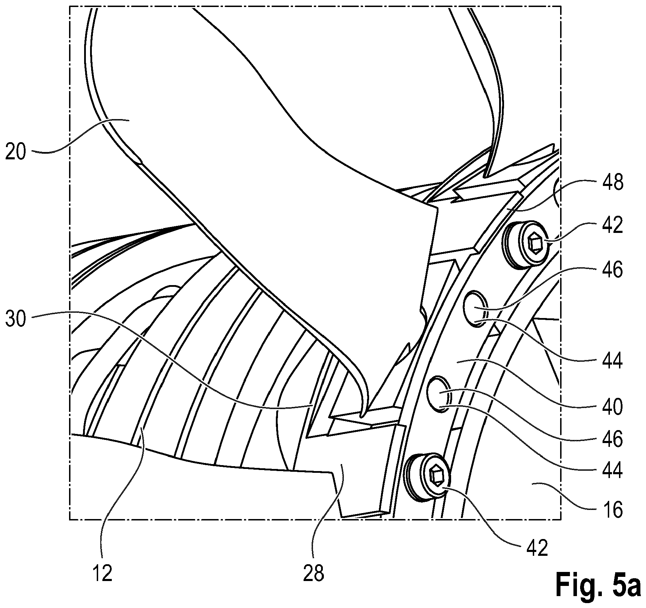

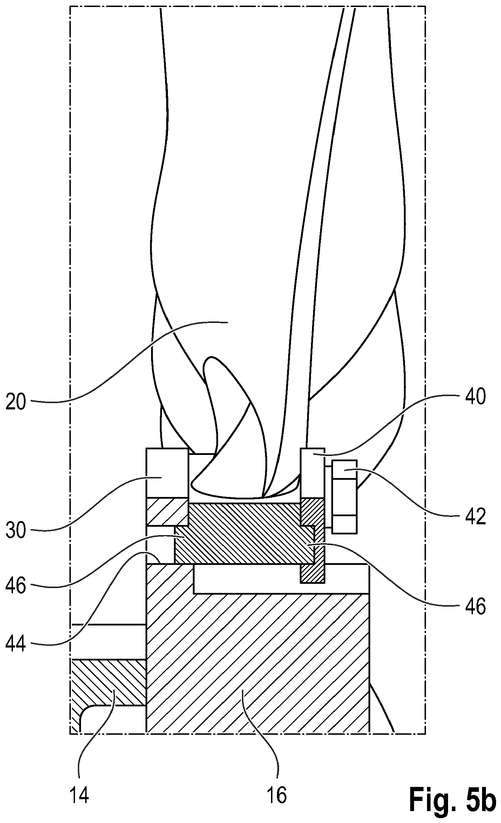

Die Figur 5a) und 5b) zeigt eine weitere Detaillierung des Schleifrings 10, insbesondere der Befestigung der Lüfterflügel 20 gegenüber dem Außenflanschring 16 bzw. dessen Aufnahmestruktur 18. Es ist ein Druckring 40 vorgesehen, der zu dem Anlagebund 30 korrespondiert und mit Verschraubungen 42 gegenüber den Begrenzungsnocken 28 gehalten ist. In Umfangsrichtung zwischen Verschraubungen 42 weist sowohl der Anlagebund 30 als auch der Druckring 40 Bohrungen 44 auf, bevorzugt jeweils zwei Stück, in die in beide Axialrichtungen ragende Haltezapfen 46 der Lüfterflügel 20 eingreifen. Der Halt der Lüfterflügel 20 gegenüber dem Außenflanschring 16 wird über den Anlagebund 30, den Druckring 40 und die Haltezapfen 46 gewährleistet. Zudem ist in der Figur 5a) eine axial gerichtete Überdeckung 48 zu erkennen. Die Überdeckung 48 überdeckt radial außen den Druckring 40 und nimmt die im Betrieb wirkende Fliehkraft des Druckrings 40, wenn dieser segmentiert gestaltet ist, auf.

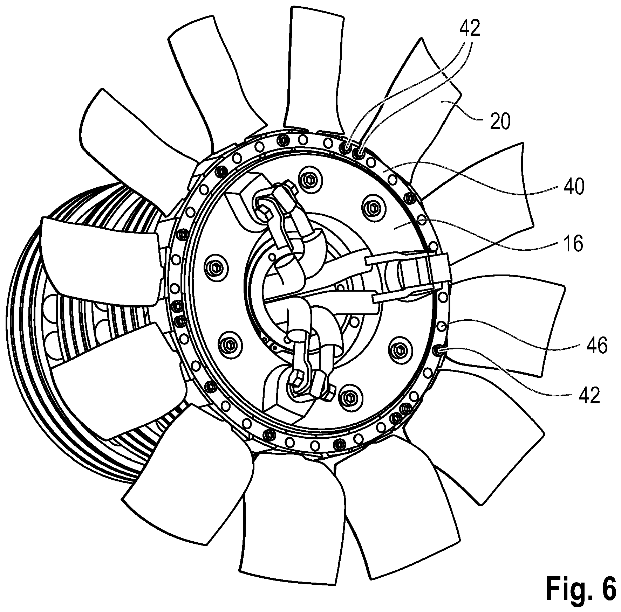

Die Figur 6 zeigt eine weitere perspektivische Axialansicht des Schleifrings 10 mit dem umlaufenden Druckring 40, der über die Verschraubungen 42 gegenüber dem Außenflanschring 16 gehalten ist. Vorliegend ist der Druckring 40 dreiteilig ausgeführt, so dass jedes Einzelteil des Druckrings 40 einen Umfang von 180° überdeckt. Infolgedessen sind in dem Übergangsbereichen zwischen den Einzelteilen des Druckrings 40 unmittelbar benachbart jeweils zwei Verschraubungen 42 gegenüber dem Außenflanschring 16 vorgesehen.

Der Außenflanschring 16 kann als ein Kunststoffpressteil oder als ein Kunststofffrästeil ausgeführt sein. Hierbei kann der Außenflanschring 16 weiterhin als ein zusammengesetzten Metall-Kunststoff-Bauteil mit einem Metallkern und einem Kunststoffüberzug ausgeführt sein.

In einer nicht dargestellten und weiter integrierenden Variante ist der zu dem Außenflanschring 16 benachbarte Isolierbereich 14 einstückig mit dem Außenflanschring 16 ausgebildet.

### Bezugszeichenliste

- 2: Schleifringeinheit
- 4: Fliehkraftring
- 5: Lüfterflansch
- 6: Bürstenanordnung
- 8: Radiallüfterkranz
- 10: Schleifring
- 12: Einzelschleifring
- 14: Isolierbereiche
- 16: Außenflanschring
- 18: Aufnahmestruktur
- 20: Axiallüfterflügeln
- 22: Anschlusseinrichtung
- 24: Anschlussbolzen
- 26: Aufnahmetasche
- 28: Begrenzungsnocke
- 30: Anlagebund
- 32: Hohlwelle
- 34: Bohrung
- 36: Seitenwandung
- 38: Aufnahmetrichter
- 40: Druckring
- 42: Verschraubung
- 44: Bohrung
- 46: Haltezapfen
- 48: Überdeckung

## Patentansprüche

1. Schleifring (10) für eine Schleifringeinheit (2) einer elektrischen Maschine mit einer Maschinendrehachse A_{D}, umfassend
zumindest einen Einzelschleifring (12), zumindest zwei Isolierbereiche (14) und einen stirnseitig angeordneten, elektrisch isolierenden Außenflanschring (16),
wobei die zumindest zwei Isolierbereiche (14) und der zumindest eine Einzelschleifring (12) konzentrisch zu der Maschinendrehachse A_{D} und abwechselnd axial benachbart zueinander angeordnet sind und
der Außenflanschring (16) als Lüfternabe fungierend eine außenumfänglich verlaufende Aufnahmestruktur (18) zur Befestigung von Axiallüfterflügeln (20) ausbildet.

2. Schleifring (10) nach Anspruch 1, **dadurch gekennzeichnet, dass** eine elektrisch und mechanisch mit dem zumindest einen Einzelschleifring (12) verbundene Anschlusseinrichtung (22) vorgesehen ist, die zumindest einen axial durch den Außenflanschring (16) herausragenden Anschlussbolzen (24) aufweist.

3. Schleifring (10) nach Anspruch 1 oder 2, **dadurch gekennzeichnet, dass** die Aufnahmestruktur (18) aus einer umfänglichen Abfolge von Aufnahmetaschen (26) und seitlichen Begrenzungsnocken (28) besteht.

4. Schleifring (10) nach Anspruch 3, **dadurch gekennzeichnet, dass** die Begrenzungsnocken (28) als separate Einlegeteile des Außenflanschrings (16) ausgeführt sind.

5. Schleifring (10) nach Anspruch 3 oder 4, **dadurch gekennzeichnet, dass** die Aufnahmetaschen (26) in axialer Richtung jeweils von einem radialen Anlagebund (30) begrenzt werden.

6. Schleifring (10) nach Anspruch 5, **dadurch gekennzeichnet, dass** axial gegenseitig zum dem Anlagebund (30) und umlaufender, bevorzugt dreiteiliger, Druckring (40) vorgesehen ist.

7. Schleifring (10) nach einem der Ansprüche 1 bis 6, **dadurch gekennzeichnet, dass** der Außenflanschring (16) als ein Kunststoffpressteil oder als ein Kunststofffrästeil ausgeführt ist.

8. Schleifring (10) nach einem der Ansprüche 1 bis 7, **dadurch gekennzeichnet, dass** der Außenflanschring (16) als ein zusammengesetzten Metall-Kunststoff-Bauteil mit einem Metallkern und einem Kunststoffüberzug ausgeführt ist.

9. Schleifring (10) nach einem der Ansprüche 1 bis 8, **dadurch gekennzeichnet, dass** der zu dem Außenflanschring (16) benachbarte Isolierbereich (14) einstückig mit dem Au-ßenflanschring (16) ausgebildet ist.

10. Schleifring (10) nach einem der Ansprüche 1 bis 9, **dadurch gekennzeichnet, dass** eine konzentrisch innerhalb des zumindest einen Einzelschleifrings (12) und innerhalb der zumindest zwei Isolierbereiche (14) angeordnete Hohlwelle (32) vorgesehen ist und der Außenflanschring (16) endseitig an die Hohlwelle (32) angesetzt ist.

11. Schleifring (10) nach Anspruch 10, **dadurch gekennzeichnet, dass** die Hohlwelle (32) in eine zentrische Bohrung (34) des Außenflanschrings (16) hereinragt und die Hohlwelle (32) und der Außenflanschring (16) in dem sich in axialer Richtung überlappenden Bereich miteinander verbunden sind.

12. Schleifringeinheit (2), insbesondere für eine Windkraftanlage, umfassend einen Schleifring (10) nach einem der vorangegangenen Ansprüche.

13. Windkraftanlage, umfassend eine Schleifringeinheit (2) nach Anspruch 12.
